(19) Europäisches Patentamt
European Patent Office
Office européen des brevets

(11) Veröffentlichungsnummer: **0 000 022**
**B1**

(12) # EUROPÄISCHE PATENTSCHRIFT

(21) Anmeldenummer: **78100034.4**

(22) Anmeldetag: **01.06.78**

(51) Int. Cl.$^3$: **B 29 D 9/00**, C 08 J 7/04, B 32 B 27/36

(54) **Kratz- und wetterfeste Verbundsysteme auf Polycarbonatbasis**

(30) Priorität: **04.06.77 DE 2725317**

(43) Veröffentlichungstag der Anmeldung:
**20.12.78 Patentblatt 78/01**

(45) Bekanntmachung des Hinweises auf die Patenterteilung:
**17.09.80 Patentblatt 80/19**

(84) Benannte Vertragsstaaten:
**DE FR GB NL SE**

(56) Entgegenhaltungen:
**DE - A - 1 694 273**
**DE - A - 1 953 276**
**DE - A - 1 963 278**

(73) Patentinhaber: **BAYER AG**
**Zentralbereich Patente, Marken und Lizenzen**
**D - 5090 Leverkusen 1, Bayerwerk (DE)**

(72) Erfinder: **Cohnen, Wolfgang, Dr.**
**Heymann Strasse 36**
**D - 5090 Leverkusen 1 (DE)**
**Kleiner, Frank, Dr.**
**Gerstenkamp 4**
**D - 5000 Köln 80 (DE)**
**Kranz, Gerhard**
**Düsseldorfer Strasse 229**
**D - 4130 Moers 1 (DE)**

**EP 0 000 022 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

# Kratz- und wetterfeste Verbundsysteme auf Basis Polycarbonat

Die vorliegende Erfindung betrifft ein Verbundsystem aus einer Polycarbonat-Schicht, die auf mindestens einer ihrer Flächen eine Beschichtung aus Polyacrylat trägt, die auf ihrer Außenfläche mit einem Fluorpolymer beschichtet ist, das mit Methylmelamin und/oder Polykieselsäure vernetzt ist wobei im Falle der Vernetzung mit Polykieselsäure der Gehalt an $SiO_2$ maximal 60 Gew.%, bezogen auf Gesamtgewicht aus Vernetzungsmittel und vernetztem Fluorpolymer, beträgt.

Formteile aus Polycarbonat weisen eine Kombination hervorragender Eigenschaften auf: hohe Lichtdurchlässigkeit, hohe Schlagzähigkeit und hohe Wärmeformbeständigkeit. Nachteilig für Formteile aus Polycarbonat — wie auch für Formteile aus allen anderen Thermoplasten — ist ihre relativ geringe Kratzfestigkeit. Aufgrund der geringen Kratzfestigkeit kommt es während des Praxiseinsatzes zu vielen feinen Kratzspuren in der Oberfläche, die eine optische Trübung hervorrufen und die Transparenz mindern.

Es ist bekannt, Formteile aus Polycarbonat mit einem Überzug aus einem Polyacrylat zu versehen. Technisch kann dies geschehen, indem man die Formteile aus Polycarbonat mit einem Lack auf Basis Polyacrylat beschichtet. Dies ist beschrieben in der DT—OS 1.694.273. Die Beschichtung kann auch durch Heißverpressen von Polycarbonatplatten mit Filmen aus Polyacrylat vorgenommen werden. Dies ist beschrieben in der DT—OS 1.953.276.

Durch eine derartige Beschichtung von Formteilen aus Polycarbonat kann das System zwar wetterfest ausgerüstet werden, zumal dann, wenn der auf Polycarbonat aufgebrachte Film aus Polyacrylat einen UV-Absorber enthält; durch diese Beschichtungen wird jedoch die Kratzfestigkeit praktisch nicht geändert.

Ferner ist bekannt, daß Formteile aus Polycarbonat mit einem kratzfesten Überzug auf Basis Methylmelamin-vernetzten, hydroxylierten Fluorpolymeren beschichtet werden können. Nach einer Ausführungsform kann dieses Polymere bis zu 60 Gew.% Siliziumdioxyd, bezogen auf das kombinierte Gewicht aus Siliziumdioxyd und vernetztem Polymeren aufweisen. Dies ist beschrieben in der DT—OS 1.963.278.

Nachteilig an diesen so beschichteten Formteilen aus Polycarbonat ist die mangelnde Wetterstabilität dieser Beschichtungen. Schon nach recht kurzer Bewitterungsdauer nehmen die Kratzfestigkeit und die Haftfestigkeit der Beschichtung ab. Die Siliziumdioxyd-modifizierten Beschichtungen sind zwar etwas wetterfester als die Siliziumdioxyd-freien. Dennoch muß die Wetterstabilität auch dieser als mangelhaft bezeichnet werden.

Ferner ist bekannt, daß Formteile aus Polyacrylat mit einem kratzfesten Überzug aus einem Methylmelamin-vernetzten hydroxylierten Fluorpolymer beschichtet werden können. Dies ist beschrieben in der DT—OS 1.963.278. Diese Beschichtungen auf Formteilen aus Polyacrylat sind kratzfest und wetterstabil. Nachteilig an diesem Verbundsystem ist jedoch die niedrige Schlagzähigkeit.

Die vorliegende Erfindung betrifft nun ein klar-transparentes, hochschlagzähes, kratz- und wetterfestes Verbundsystem aus Polycarbonat als Substrat, das auf mindestens einer seiner Oberflächen einen Film aus Polyacrylat aufweist, der eine Beschichtung trägt auf Basis Methylmelamin-vernetztem und/oder Polykieselsäure-vernetztem hydrohyliertem Fluorpolymeren.

Unbeschichtete Formteile aus Polycarbonat weisen eine hohe Schlagzähigkeit auf. Nach DIN 53 453 bleiben die Prüfkörper "ungebrochen". Dagegen haben Formteile aus Polyacrylat eine wesentlich niedere Schlagzähigheit. Bei der Prüfung der Schlagzähigkeit werden Werte von 14—26 $kJ/m^2$ erhalten. Mit Polyacrylat beschichtete Formteile aus Polycarbonat weisen eine Schlagzähigkeit auf, die wesentlich niedriger liegt als die der unbeschichteten Polycarbonat-Formteile.

Es wurde nun überraschenderweise gefunden, daß solche Formteile aus Polycarbonat, die mit Polyacrylat beschichtet sind, dann eine sehr hohe Schlagzähigkeit aufweisen, wenn die Polyacrylat-Beschichtung eine zusätzliche Beschichtung aus Melamin-modifiziertem hydroxyliertem Fluorpolymeren auf ihrer äußeren Oberfläche aufweist.

Der Polyacrylatfilm kann eine Dicke von 0,010 bis 1,25 mm haben. Die Beschichtung aus Methylmelamin vernetztem hydroxyliertem Fluorpolymeren kann eine Dicke von 0,005 bis 0,5 mm aufweisen.

Diese Erfindung betrifft weiterhin ein Verfahren zur Herstellung eines kratzfesten Verbundsystems, bei dem entweder kontinuierlich oder diskontinuierlich zuerst eine Beschichtung aus Polyacrylat auf die Formteile aus Polycarbonat aufgebracht wird und anschließend auf diese Acrylatschicht ein Überzug aus Methylmelamin-vernetzem hydroxyliertem Fluorpolymer. Dies kann geschehen, indem die Polycarbonat-Formteile zuerst mit einem Lack aus Polyacrylat beschichtet und nach dem Aushärten mit einer Überzugslösung aus Fluorpolymeren behandelt werden. Wahlweise kann auch das Substrat Polycarbonat zunächst ein- oder zweiseitig mit Folien aus Polyacrylat verbunden und die Polyacrylatschicht anschließend mit Fluorpolymer überzogen werden. Die Herstellung des erfindungsgemäßen Verbundsystems erfolgt dadurch, daß eine einseitig mit Fluorpolymer beschichtete Folie aus Polyacrylat mit dem Substrat Polycarbonat so verbunden wird, daß die Fluorpolymer-

Beschichtung nach außen weist.

Der Verbund zwischen Polyacrylat-Folie und Polycarbonat-Substrat kann in einer Presse unter Hitze und Druck erreicht werden. Wahlweise kann die Polyacrylat-Folie auf Platten aus Polycarbonat dadurch aufgebracht werden, daß die Acrylfolie und die Platte aus Polycarbonat durch den Walzenspalt eines Walzenpaares, dessen Walzen erwärmt sind, angepreßt werden. Zum Zwecke einer wirksamen Verbindung sollte die angewandte Temperatur mindestens 160°C und der Druck mindestens 1,4 kg/cm² betragen. Je höher die Temperatur ist, desto kürzer ist die erforderliche Zeit und desto niedriger der erforderliche Druck.

Als Polycarbonate im Sinne der Erfindung kommen durch Umsetzung von Diphenolen, insbesondere von Dihydroxydiarylalkanen, mit Phosgen oder Diestern der Kohlensäure erhältliche Polykondensate in Betracht, wobei von den unsubstituierten Dihydroxydiarylalkanen auch solche geeignet sind, deren Arylreste in o- und/oder m-Stellung zur Hydroxylgruppe Methylgruppen oder Halogenatome tragen. Ebenso sind verzweigte Polycarbonate geeignet.

Polycarbonate haben mittlere Gewichtsmittel-Molekulargewichte $\overline{M}w$ zwischen 10.000 und 100.000, vorzugsweise zwischen 20.000 und 40.000, ermittelt durch Messungen der rel. Viskosität in $CH_2Cl_2$ bei 25°C und einer Konzentration von 0,5 Gew.-%.

Geeignete Diphenole sind z.B. Hydrochinon, Resorcin 4,4'-Dihydroxydiphenyl, Bis-(hydroxyphenyl)alkane wie beispielsweise $C_1$—$C_8$-Alkylen- bzw. $C_2$—$C_8$-Alkylidenbisphenole, Bis-(hydroxyphenyl)-cycloalkane wie beispielsweise $C_5$—$C_{15}$-Cycloalkylen- bzw. $C_5$—$C_{15}$-Cycloalkylidenbisphenole, Bis-(hydroxyphenyl)-sulfide, -äther, -ketone, -sulfoxide oder -sulfone; ferner $\alpha,\alpha'$-Bis-(hydroxyphenyl)-diisopropylbenzol sowie die entsprechenden kernalkylierten bzw. kernhalogenierten Verbindungen. Bevorzugt sind Polycarbonate auf Basis Bis - (4 - hydroxyphenyl) - propan - 2,2 (Bisphenol A), Bis- 4 - hydroxy - 3,5 - dichlor-phenyl) - propan - 2,2 (Tetrachlorbisphenol A), Bis - (4 - hydroxy - 3,5 - dibrom - phenyl) - propan - 2,2 - (Tetrabrombisphenol A), Bis - (4 - hydroxy - 3,5 - dimethylphenyl) - propan - 2,2 (Tetramethylbisphenol A), Bis - (4 - hydroxyphenyl) - cyclohexan 1,1 (Bisphenol Z) sowie auf Basis von Dreikernbisphenolen wie $\alpha,\alpha'$ - Bis - (4 - hydroxyphenyl) - p - diisopropylbenzol.

Weitere für die Herstellung von Polycarbonat geeignete Diphenole sind in den US-Patenten 2.970.131, 2.991.273, 2.999.835, 2.999.846, 3.014.891, 3.028.365, 3.062.781, 3.148.172, 3.271.367, 3.271.368 und 3.280.078 beschrieben.

Die erfindungsgemäß verwendete Polyacrylat-Folie bzw. der erfindungsgemäß verwendete Lack auf Basis Polyacrylat kann aus irgendeinem Polyacrylat oder Polymethacrylat bestehen. Polyacrylate und Polymethacrylate sind Homo- und Copolymerisate des Acrylsäureesters und Methacrylsäureesters mit molekulargewichten von $10^3$ bis $10^7$ und mit 4 bis 18 C-Atomen in der Monomereinheit wie z.B. Polyacrylsäure - isobutylester, Polymethacrylsäuremethylester, Polymethacrylsäureäthylhexylester, Polyacrylsäureaethylester, Copolymere aus verschiedenen Acrylsäureestern und/oder Methacrylsäureestern wie z.B. Methacrylsäuremethylester - Acrylsäurecyclohexylester - Copolymere, ferner Copolymere von Acrylsäureestern und/oder Methacrylsäureestern mit Vernetzern wie z.B. 1,4 - Butandiol - dimethacrylat, Glykoldimethacrylat, Triglykoldimethacrylat, Trimethylolpropan - trimethacrylat, Allylmethacrylat, Triallylcyanurat, ferner Copolymere der Acrylsäureester und/oder Methacrylsäureester mit Styrol und/oder $\alpha$ - Methylstyrol sowie die aus Acrylestern, Methacrylsäureestern, Styrol und Butandien zusammengesetzten Pfropfpolymere und Mischpolymere und Polymermischungen. Die vorstehend genannten Molekulargewichte der Polyacrylate und Polymethacrylate sind als Zahlenmittel $\overline{M}n$ zu verstehen, ermittelt beispielsweise durch Endgruppenanalyse.

Die erfindungsgemäße Methyl-melaminvernetzte Überzugsmasse an hydroxyliertem Fluorpolymer ist ein vernetztes Polymer, das Fluor enthaltende Polymerketten aufweist, die eine Vielzahl von Sauerstoff/Methylmelamin-Bindungen tragen, wobei der Sauerstoff an ein Kohlenstoffatom im Gerüst der fluorhaltigen Polymerkette oder eine Seitenkette gebunden ist und das Kohlenstoffatom wenigstens ein Wasserstoffatom aufweist, wobei die Ketten wenigstens 20 Gew.% Fluor enthalten und durch die Sauerstoff - Methylmelamin - Bindungen vernetzt sind, dadurch gekennzeichnet, daß Fluor im Gerüst der Polymerkette angeordnet ist, wobei jede Polymerkette ein Einheitsgewicht von nicht mehr als 700 je Sauerstoffatom in der vernetzten O - Methylmelamin - Bindung besitzt und das Methylmelamin der Sauerstoff - melamin - Bindung folgende Formel aufweist:

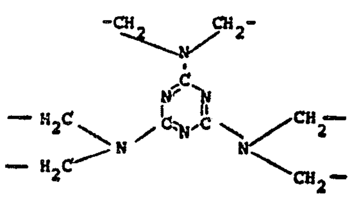

wobei wenigstens zwei der $CH_2$-Gruppen an das Sauerstoffatom in der vernetzten Sauerstoff/Methylmelamin - Bindung gebunden sind.

Die Vernetzung der hydroxylierten Fluorpolymeren kann anstelle von Methylmelamin mit Polykieselsäure erfolgen. Es können auch beide Vernetzungsmöglichkeiten nebeneinander benutzt werden. Die mit Polykieselsäure vernetzten Fluorpolymeren sollen maximal 60 Gew.-% Siliziumdioxid, bezogen auf Gesamtgewicht aus Vernetzungsmittel und vernetztem Polymeren, enthalten.

Die Polymerkette des Methylmelamin-vernetzten Polymeren resultiert aus fluorhaltigen Monomereinheiten. vorzugsweise Tetrafluoräthylen oder Chlortrifluoräthylen und gegebenenfalls aus copolymerisierten fluorfreien, äthylenisch ungesättigten Monomereinheiten, wobei die Einheiten an Methylmelamin gebundenen Sauerstoff aufweisen.

Vorzugsweise leitet sich die fluorfreie, äthylenisch ungesättigte Monomereinheit von einem Hydroxyalkylvinyläther, z.B. Hydroxybutylvinyläther, 2-Hydroxypropylvinyläther oder 6-Hydroxyhexylvinyläther oder Vinylacetat ab.

Das Methylmelamin im Sinne der Erfindung leitet sich vorzugsweise von Hexa-(methoxymethyl)-melamin oder Hexa-(cyclohexyloxymethyl)-melamin ab.

Das erfindungsgemäße Verbundsystem kann entweder klartransparente farblose als auch transparent- oder transluzent- oder gedeckteingefärbte Einzelkomponenten enthalten bzw. aus entsprechenden Schichten aufgebaut sein.

Die vorliegende Erfindung wird im folgenden anhand der Beispiele näher beschrieben:

Beispiel A

Herstellung einer Überzugslösung eines mit Methylmelamin vernetzten, hydroxylierten Fluorpolymeren.

a) Herstellung des hydroxylierten Fluorpolymer
In einem 8 l-Reaktor wurden 5500 ml tert. Butylalkohol, 26 g wasserfreies Kaliumcarbonat, 330 g 4-Hydroxybutylvinyläther, 0,9 g Azoisobutvrodinitril und 390 kg Tetrafluoräthylen gegeben und unter Rühren während 3,5 h auf 65°C erhitzt, wobei währenddessen der Druck von einem Anfangswert von etwa 9,8 kg/cm² auf 3,9 kg/cm² abfiel.
Nach dem Abkühlen wurde aus der klaren farblosen Lösung das weiße feste Copolymere durch Zugabe von Wasser ausgefällt. Nach Abfiltrieren, Waschen mit Wasser und Trocknen an der Luft wurde ein weißes festes Copolymeres mit einem Fluorgehalt von 35,5% erhalten. Das Copolymere war in Methanol löslich.

b) Herstellung der Überzugslösung aus hydroxyliertem Fluorpolymer gemäß a) und Hexamethoxymethylmelamin.
Zu 3.000 g einer 14.65%igen Lösung des oben beschriebenen Copolymeren (a) in Methanol gab man 500 g Methylisoamylketon, 500 g Toluol, 1000 g Essigsäure, 146 g Hexamethoxymethylmelamin und 12 g einer 20%igen p-Toluolsulfonsäurelösung in Isopropanol. Ferner wurden dieser Lösung 5 g Siliconöl zur Verhinderung des Orangenschaleneffektes und 20 g 2(2' - Hydroxy - 5' - methylphenyl) - benzotriazol zur Stabilisierung gegen die Einwirkung von UV-Licht gegeben.

Beispiel B

Herstellung einer Überzugslösung aus mit Polykieselsäurevernetzbarem, hydroxyliertem Fluorpolymer.

Es wurde eine hydrolysierte Äthylsilkatlösung durch Behandlung von 100 g Tetraäthylorthosilikat mit 69,5 g wasserfreiem Äthanol und 22,5 g 0,1 n Chlorwasserstoffsäure hergestellt. Nach 24 stündigem Altern wurde ein 120 g-Anteil dieser Lösung mit 102 g Methylisoamylketon vermischt und bei 32° unter vermindertem Druck erhitzt, bis das Gewicht des Rückstandes 120 g betrug.

Durch diese Maßnahme wurde der Hauptanteil des Aethanols entfernt, wobei eine Lösung aus Polykieselsäure in Methylisoamylketon zurückblieb. Der Siliziumdioxygehalt wurde auf 15% berechnet.

Eine (Tetrafluoräthylen/4-Hydroxybutylvinyläther)/Siliziumdioxydüberzugsmasse (Verhältnis 60:40) wurde durch Vermischen von 200 g der obigen Polykieselsäurelösung mit 164 g Tetrahydrofuran und 136 g einer 33%igen Lösung des hydroxylierten Fluorpolymeren (a) in Methanol hergestellt.

Beispiel 1

Polymethylmethacrylat

Platten aus Polymethylmethacrylat mit einer Schichtdicke von 4,0 mm wurden während zwei Minuten in die oben unter Beispiel A beschriebene Lösung eingetaucht, mit etwa 15 cm/min herausgezogen und während einer Stunde bei 135° mit Hitze behandelt. Der erhaltene Überzug war hart, farblos, glänzend und transparent.

Der Überzug wies nach dem Aushärten eine Stärke von ca. 8 $\mu$ auf. Die Haftfestigkeit, gemessen mit der Gitterschnitt-Methode, betrug 100%. Die Daten sind in der Tabelle 1 aufgeführt.

Zum Vergleich sind unbeschichtete Platten von 4,0 mm Dicke aus Polymethylmethacrylat ebenfalls gemessen worden. Die Daten befinden sich in der Tabelle 1.

Beispiel 2

Polycarbonat

2.1 Polycarbonat beschichtet mit einer Überzugslösung nach Beispiel A
Beschichtet wurden Platten aus Polycarbonat auf Basis Bisphenol A mit einer relativen Lösungsviskosität ($\eta$ rel.) nach DIN 7746 von 1,31 und einer Schichtdicke von 4,0 mm. Die Überzugslösung nach Beispiel A brachte man mit Hilfe eines Filmaufziehgerätes mit einer Geschwindigkeit von 40 cm/min auf. Der Überzug wurde 17 Stunden bei 135°C gehärtet.
Nach dem Aushärten wies der Überzug eine Stärke von ca. 12 $\mu$ auf. Die Eigenschaften sind in der Tabelle 1 enthalten.

2.2 Polycarbonat beschichtet mit 1.) einer Überzugslösung nach Beispiel A als Grundierung und 2.) mit einer Überzugslösung nach Beispiel B als Finish.
Platten aus Polycarbonat auf Basis Bisphenol A ($\eta_{rel} = 1,31$) mit einer Dicke von

4,0 mm wurden 2 min in die Überzugslösung gemäß Beispiel A getaucht, mit 30 cm/min herausgezogen und 30 min bei 160°C zu einem Grundierüberzug gehärtet. Nach dem Abkühlen auf Raumtemperatur wurden die Platten 2 min in die Überzugslösung gemäß Beispiel B eingetaucht, mit 30 cm/min-Geschwindigkeit herausgenommen bei 160°C über 2 h gehärtet. Die Prüfergebnisse sind in der Tabelle 1 enthalten.

Zum Vergleich zu den Beispielen 2.1 und 2.2 wurden gleichartige unbeschichtete Polycarbonatplatten ebenfalls untersucht (Ergebnis siehe Tabelle 1).

Beispiel 3

Polycarbonat beschichtet mit einem Überzug auf Basis Polymethylmethacrylat

Platten aus Polycarbonat auf Basis Bisphenol A ($\eta_{rel} = 1{,}31$) von 4,0 mm Schichtdicke wurden 2 min. lang in folgende Überzugslösung getaucht:

25 Gew.% Polymethylmethacrylat
30 Gew.% Toluol
30 Gew.% 1,2-Dichloräthan
15 Gew.% Methyl-äthyl-keton.

Nach langsamem Herausziehen der Platten aus der Lösung ließ man diese über 24 h bei Raumtemperatur ablüften und dann 2 h bei 105°C härten. Nach dem Abkühlen wurden die Eigenschaften ermittelt. Sie sind in Tabelle 1 aufgeführt.

Beispiel 4

Polycarbonat beschichtet mit einem Überzug auf Basis Polymethylmethacrylat als Grundierung und mit einem Überzug nach Beispiel A als Finish

Nach Beispiel 3 beschichtete Polycarbonatplatten wurden 2 min lang in die Überzugslösung gemäß Beispiel A getaucht, mit einer Geschwindigkeit von 40 cm/min aus der Lösung genommen und 1 h bei 135°C gehärtet. Der erhaltene Überzug war hart, farblos, transparent und von hohem Glanz.

Die Prüfergebnisse befinden sich in Tabelle 1.

Beispiel 5

Polycarbonat, beidseitig mit Polymethylmethacrylat laminiert und anschließend auf Überzug aus Beispiel A beschichtet

Die Herstellung des Laminates aus Polymethylmethacrylat / Polycarbonat / Polymethacrylat erfolgte während der Extrusion von Polycarbonat auf Basis Bisphenol A ($\eta$ rel. 1,31) bei einer Schmelztemperatur von 280°C über eine Breitschlitzdüse. Folien aus Polymethylmethacrylat mit einer Schichtdicke von 0,025 mm wurden mit Hilfe von Rollen so auf die Oberflächen der extrudierten Polycarbonatplatte aufgebracht, daß eine kontinuierliche Herstellung möglich wurde. Dies wurde dadurch erreicht, daß die 4,0 mm dicke PC-Platte und die beiden Folien aus Polymethylmethacrylat so durch den Walzenspalt eines Walzenpaares geführt wurden, daß die Folien die beiden äußeren Oberflächen der Polycarbonat-Platte bedeckten. Die Temperatur der Walzen war auf 60°C eingestellt; die Temperatur der extrudierten Polycarbonatplatte betrug am Zusammenfluß 160°C und der Druck der beiden Walzen gegeneinander 1,4 kg/cm.

Die so hergestellten Laminate wurden geprüft. Die Ergebnisse sind in Tabelle 1 aufgeführt.

Laminate wie oben beschrieben, wurden 2 min in die Überzugslösung gemäß Beispiel A getaucht, mit einer Geschwindigkeit von 15 cm/min aus der Lösung genommen und 1 h bei 135°C gehärtet.

Die Prüfergebnisse sind in Tabelle 1 augeführt.

Beispiel 6

Polycarbonat, einseitig mit Polymethylmethacrylat laminiert und anschließend mit Überzug aus Beispiel A beschichtet

Die Herstellung eines derartigen Laminates aus Polycarbonat auf Basis Bisphenol A ($\eta$ rel. = 1,31) erfolgte wie im Beispiel 5 beschrieben. Die extrudierte Polycarbonatplatte hatte eine Dicke von 4,0 mm; die Folie aus Polymethylmethacrylat hatte eine Dicke von 0,05 mm. Platte und Folie wurden durch den gleiche Walzenspalt gegeben.

So hergestellte Platten wurden auf der Polymethylmethacrylatseite mit Hilfe eines Filmaufziehgerätes mit der Überzugslösung des Beispiels A beschichtet. Die Abziehgeschwindigkeit betrug 40 cm/Min. Anschließend wurde die Beschichtung 1 Std. bei 135°C ausgehärtet.

Die oben beschriebene laminierte unbeschichtete und die laminierte beschichtete Platten wurden untersucht. Die Ergebnisse sind in der Tabelle enthalten.

Beispiel 7

Polycarbonat, laminiert mit einer einseitig beschichteten Folie aus Polymethylmethacrylat

Eine Folie aus Polymethylmethacrylat von 1,0 mm Dicke wurde mit Hilfe eines Filmaufziehgerätes mit der Überzugslösung des Beispiels A beschichtet. Die Abziehgeschwindigkeit betrug 15 cm pro min. Anschließend härtete man die Beschichtung 1 h bei 135°C. Die so beschichteten Folien wurden zu 15 x 20 cm großen Stücken geschnitten. Polycarbonatplatten von 4,0 mm Dicke und gleichen Flächenmaßen wurden in einer Heißsiegelpresse so mit den Acrylatfolien einseitig verbunden, daß die Beschichtung nach außen wies.

Der Verbund wurde unter folgenden Bedingungen erreicht: Temperatur: 160°C; Druck: 35 kg/cm$^2$; Dauer: 5 min.

Nach dem Abkühlen prüfte man die Verbundplatten auf ihre Eigenschaften. Die Werte sind in Tabelle 1 enthalten.

Erläuterungen zu den Angaben in der Tabelle 1.

1. Kratzfestigkeit — Stahlwolletest

Die Kratzfestigkeit der Überzüge gegenüber Stahlwolle wurde dadurch bestimmt, daß ein kleiner Bausch (1—2 $cm^2$) Stahlwolle 20 mal über die gleiche Fläche des Überzugs unter Anwendung einer Kraft von 250—300 g je Quadratzentimeter des Stahlwollebausches hin und her gerieben wird. Der Überzug wird dann hinsichtlich der Verkratzung untersucht und wie folgt bewertet:

| | |
|---|---|
| schwere Kratzer über den gesamten Bereich | 0 — keine |
| ca. 75% der geriebenen Flächenzeigt Kratzer | 1 — schlecht |
| ca. 50% der geriebenen Fläche zeigt Kratzer | 2 — Befriedigend |
| ca. 25% der geriebenen Fläche zeigt Kratzer | 3 — gut |
| sehr weinige sichtbar Kratzer | 4 — sehr gut |
| kein sichtbaren Kratzer | 5 — hervorragend |

2. Kratzfestigkeit — Siliciumcarbid-Falltest (ASTM—D—613—44)

Die Kratzfestigkeit nach dem Siliciumcarbid-Falltest wurde dadurch bestimmt, daß zunächst die Trübung nach ASTM D 1003 gemessen wurde und nach Berieselung der Probekörper-Oberflächen mit 1000 g Siliciumcarbidkörnern aus 63 cm Höhe die Trübung nochmals ermittelt wurde. Angegeben in der Tabelle ist die Differenz der Trübungs-Werte.

3. Die Haftfestigkeit der Überzüge wurde mit Hilfe des Gitterschnitt-Testes ermittelt (DIN 5315).

Es bedeuten: 0 sehr gute Haftung
1 gute Haftung
2 mäßige Haftung
3 schlechte Haftung
4 sehr schlechte Haftung

4. Die Wetterfestigkeit der Überzüge wurde mit Hilfe eines Kohlebogen-Bewitterungsgerätes (ASTM E—42—57) ermittelt. Vor und nach einer 2.000 ständigen künstlichen Bewitterung wurden Kratzfestigkeit und Haftfestigkeit der Überzüge gemessen.

5. Die Lichtdurchlässigkeit wurde nach DIN 5036 ermittelt.

6. Die Schlagzähigkeit wurde nach DIN 53 453 an 6 mm breiten Prüfkörpern gemessen, die aus den 4 mm dicken Platten herausgearbeitet wurden.

Je 12 Prüfkörper wurden gemessen und die Werte ermittelt. Bei einseitig beschichteten Prüfkörpern lag die Beschichtung während der Prüfung in der Zugzone.

TABELLE 1

Beispiele Eigenschaften

| Nr. | Verbundsystem | Schlagzähigkeit (kJ/m²) | Lichtdurchlässigkeit | vor der Bewitterung: kratzfest. Stahlwolle Test | vor der Bewitterung: kratzfest. Silizium-carbid-Test | vor der Bewitterung: Haftfestigkeit Gitterschnitt | nach der Bewitterung: kratzfest. Stahlwolle Test | nach der Bewitterung: kratzfest. Silizium-carbid-Test | nach der Bewitterung: Haftfest. Gitterschnitt |
|---|---|---|---|---|---|---|---|---|---|
| 1 | PMMA-beschichtet mit A | 19 | 88 | 5 | 1,2 | 0 | 5 | 1,5 | 0 |
| | PMMA-unbeschichtet | 18 | 88 | 0 | 48 | – | 0 | 52 | – |
| 2 | PC-beschichtet mit A | n. gebr. | 86 | 3–4 | 4,2 | 2–3 | 0 | 57 | 3–4 |
| | PC-beschichtet mit A und mit B | n. gebr. | 85,5 | 4 | 3,7 | 0 | 2–3 | 38 | 4 |
| | PC-unbeschichtet | n. gebr. | 86 | 0 | 51 | – | 0 | 69 | – |
| 3 | PC-beschichtet mit PMMA-Lack | 65 | 86,5 | 0–1 | 54 | 0 | 0 | 57 | 0 |
| 4 | PC-beschichtet mit PMMA-Lack mit A | n. gebr. | 86 | 5 | 1,3 | 0 | 5 | 1,7 | 0 |
| 5 | PC-beiseitig laminiert mit PMMA-Folie | 35 | 86,5 | 0–1 | 50 | 0 | 0 | 53 | 0 |
| | PC-beidseitig laminiert mit PMMA-Folie beidseitig beschichtet mit A | n. gebr. | 86 | 5 | 1,4 | 0 | 5 | 1,5 | 0 |

TABELLE 1

Beispiele Eigenschaften

| Nr. | Verbundsystem | Schlagzähigkeit ($kJ/m^2$) | Lichtdurchlässigkeit | vor der Bewitterung | | | nach der Bewitterung | | |
|---|---|---|---|---|---|---|---|---|---|
| | | | | kratzfest. Stahlwolle Test | kratzfest. Siliziumcarbid-Test | Haftfestigkeit Gitterschnitt | kratzfest. Stahlwolle Test | kratzfest. Siliziumcarbid-Test | Haftfest. Gitterschnitt |
| 6 | PC-einseitig laminiert mit PMMA-Folie einseitig beschichtet mit A | n. gebr. | 86 | 5 | 1,2 | 0 | 5 | 1,5 | 0 |
| | PC-einseitig laminiert mit PMMA-Folie unbeschichtet | 55 | 86 | 0 | 53 | – | 0 | 57 | – |
| 7 | PC-einseitig heiß verpreßt mit PMMA-Folie beschichtet mit A | n. gebr. | 86 | 5 | 1,3 | 0 | 5 | 1,4 | 0 |

**Patentansprüche**

1. Verbundsystem aus Polycarbonat- und Polyacrylat-Schichten, dadurch gekennzeichnet, daß die Polycarbonatschicht auf mindestens einer ihrer Oberflächen eine Polyacrylatschicht trägt, die auf ihrer Außenfläche mit einem Fluorpolymer beschichtet ist, das mit methylmelamin und/oder Polykieselsäure vernetzt ist, wobei im Falle der Vernetzung mit Polykieselsäure der Gehalt an $SiO_2$ maximal 60 Gew.-%, bezogen auf Gesamtgewicht aus Vernetzungsmittel und vernetztem Fluorpolymeren, beträgt.

2. Verbundsystem gemäß Anspruch 1, dadurch gekennzeichnet, daß die Polyarylatschicht aus Polymethylmethacrylat besteht.

3. Verbundsystem gemäß Anspruch 1, dadurch gekennzeichnet daß die Polycarbonatschicht beidseitig beschichtet ist.

4. Verfahren zur Herstellung der Verbundsysteme gemäß Anspruch 1 bis 3, dadurch gekennzeichnet, daß ein Polyacrylatfilm von 0,010 bis 1,25 mm Dicke auf die Polycarbonatschicht aufgebracht wird und anschließend die Polyacrylatschicht mit Fluorpolymeren überzogen wird.

5. Verfahren zur Herstellung der Verbundsysteme gemäß Ansprüche 1 bis 3, dadurch gekennzeichnet, daß ein einseitig mit Fluorpolymer beschichteter Film aus Polyacrylat auf eine Polycarbonatschicht so aufgebracht wird, daß die Fluorpolymerbeschichtung die äußere Oberfläche des Verbundsystems bildet.

**Claims**

1. Laminate consisting of polycarbonate and polyacrylate layers, characterised in that the polycarbonate layer carries, on at least one of its surfaces, a polyacrylate layer which, on its outer surface, is coated with a fluoropolymer which is crosslinked with methylmelamine and/or polysilicic acid; if the fluoropolymer is crosslinked with polysilicic acid the content of $SiO_2$ is a maximum of 60% by weight, relative to the total weight of crosslinking agent and crosslinked fluoropolymer.

2. Laminate according to claim 1, characterised in that the polyacrylate layer consists of polymethyl methyacrylate.

3. Laminate according to claim 1, characterised in that the polycarbonate layer is coated on both sides.

4. Process for the production of the laminates according to claim 1 to 3, characterised in that a polyacrylate film 0.010 to 1.25 mm thick is applied to the polycarbonate layer and the polyacrylate layer is then covered with the fluoropolymer.

5. Process for the production of the laminates according to claims 1 to 3, characterised in that a polyacrylate film coated on one side with a fluoropolymer is applied to a polycarbonate layer in a manner such that the fluoropolymer coating forms the outer surface of the laminate.

**Revendications**

1. Système composite constitué de couches de polycarbonate et de polyacrylate et caractérisé en ce que la couche de polycarbonate porte sur une au moins de ses faces une couche de polyacrylate elle-même revêtue sur sa face extérieure d'un polymère fluoré réticulé par la méthylmélamine et/ou l'acide polysilicique, étant spécifié que, dans le cas de la réticulation par l'acide polysilicique, la teneur en $SiO_2$ est au maximum de 60% en poids par rapport au poids total d'agent réticulant et de polymère fluoré réticulé.

2. Système composite selon la revendication 1, caractérisé en ce que la couche de polyacrylate consiste en polyméthacrylate de méthyle.

3. Système composite selon la revendication 1, caractérisé en ce que la couche de polycarbonate est revêtue sur les deux faces.

4. Procédé de préparation des systèmes composites selon l'une quelconque des revendications 1 à 3, caractérisé en ce que l'on applique une pellicule de polyacrylate de 0,010 à 1,25 mm d'épaisseur sur la couche de polycarbonate et on revêt ensuite la couche de polyacrylate par le polymère fluoré.

5. Procédé de préparation des systèmes composites selon l'une quelconque des revendications 1 à 3, caractérisé en ce que la pellicule de polyacrylate revêtue sur une face par le polymère fluoré est appliquée sur une couche de polycarbonate avec le revêtement de polymère fluoré formant la face extérieure du système composite.